# EUROPÄISCHE PATENTANMELDUNG

(11) **EP 0 947 732 A1**
(43) Veröffentlichungstag der Anmeldung: **06.10.1999**
(21) Anmeldenummer: 99105543.5
(22) Anmeldetag: 18.03.1999
(51) Int. Cl.: F16H 9/16

(54) **Stufenlos regelbares Kegelscheiben-Umschlingungsgetriebe**

(30) Priorität: 30.03.1998 DE 29805792 U
(71) Anmelder: Dietl, Matthias A., 80799 München (DE)
(72) Erfinder: Dietl, Matthias A., 80799 München (DE)
(74) Vertreter: Alber, Norbert, Dipl.-Ing.

(57) **Zusammenfassung**

Ein stufenlos verstellbares Zugmittelgetriebe, bei dem die Veränderung der Übersetzung durch Verändern des wirksamen Durchmessers wenigstens einer der Zugmittelscheiben (9,10), über welche das Zugmittel (14,15) laüft, durchgeführt wird. Aufgabe ist, ein Zugmittelgetriebe zu schaffen, welches einfach und kostengünstig in der Herstellung und im Aufbau ist, und einen möglichst geringen Bauraum bei möglichst großer Bandbreite des Übersetzungsverhältnisses zu bieten. Ein erfindungsgemäßes Zugmittelgetriebe mit einem endlosen Zugmittel (14,15), zwei Zugmittel-Scheiben, wovon wenigstens eine Scheibe (9,10) eine zwischen zwei Endstellungen in ihrem wirksamen Durchmesser verstellbare Verstellscheibe ist, die in Richtung auf eine ihrer Endstellungen vorgespannt ist, und einem Variator (11) zum Verlagern des Laufweges wenigstens eines Zugmittels (14,15) in der jeweiligen Zugmittelebene (20a,20b), kennzeichnet sich dadurch, daß die Verstellscheibe (9,10) bezüglich der Zugmittelebene (20a,20b) des auf ihr laufenden Zugmittels (14,15) symmetrisch vorgespannt ist.

## Beschreibung

### I. Anwendungsgebiet

Die Erfindung betrifft ein stufenlos verstellbares Zugmittelgetriebe, bei dem die Veränderung der Übersetzung durch Verändern des wirksamen Durchmessers wenigstens einer der Zugmittelscheiben, über welche das Zugmittel läuft, durchgeführt wird.

### II. Technischer Hintergrund

Als Zugmittel kann ein Riemen, beispielsweise ein Keilriemen oder ein Rundriemen, ebenso verwendet werden wir eine Kette oder ein anderes Gliederband.

Die Zugmittelscheiben sind an das jeweils verwendete Zugmittel angepaßt, wobei insbesondere bei Rundriemen und Keilriemen Scheiben verwendet werden, deren im wesentlichen axial ausgerichtete Zugmittel-Laufflächen gegenüber der Zugmittelebene, in welcher das endlose Zugmittel umläuft, leicht geneigt sind.

Diejenigen Zugmittelscheiben, deren wirksamer Durchmesser zwecks Veränderung der Übersetzung veränderbar ist, werden als Verstellscheiben bezeichnet.

Dabei ist es bekannt, bei den beschriebenen konischen Zugmittel-Laufflächen die Verstellscheibe aus zwei beidseits der Zugmittelebene angeordneten Halbscheiben zusammenzusetzen, deren axialer Abstand veränderbar ist, wodurch sich wegen der Konizität der Laufflächen auch der wirksame Durchmesser dieser Verstellscheibe ändern läßt.

Ebenso ist es auch möglich, den wirksamen Durchmesser ohne Axialbewegung nur durch radiale Bewegungen der Verstellscheibe zu bewirken, indem beispielsweise die Verstellscheibe durch ggf. gegeneinander überlappende Segmente gebildet wird, die in der Zugmittelebene verschwenkbar oder radial zur Verstellscheibenachse verlagerbar sind.

Die einfachste Form eines Zugmittelgetriebes besteht aus zwei Scheiben, über welche das endlose Zugmittel geführt ist, wobei wenigstens eine der Scheiben als Verstellscheibe ausgebildet ist.

Zur Erhöhung des Übersetzungsbereiches kann das Zugmittelgetriebe aus mehreren, beispielsweise zwei, Zugmitteln bestehen, die dann über insgesamt mindestens vier Scheiben geführt werden. Dabei sitzt häufig eine Riemenscheibe des einen Zugmittels auf gleicher Achse mit einer Zugmittelscheibe des anderen Zugmittels und ist mit dieser drehfest verbunden, beispielsweise einstückig als Doppelscheibe ausgebildet, wie beispielsweise in der DE 38 25 091 ersichtlich.

Gerade bei denjenigen Verstellscheiben, die durch Axialverlagerung der Halbscheiben der Verstellscheibe in ihrem wirksamen Durchmesser verändert werden, besteht jedoch das Problem, daß sich bei einer festliegenden Halbscheibe und einer axial verstellbaren Halbscheibe die Zugmittelebene axial versetzt wird. Bleibt in diesem Fall die andere Scheibe, über welche das Zugmittel läuft, unverändert in Position, ergibt sich ein Schräglauf des Zugmittels mit der Folge mangelhafter Traktion und insbesondere zunehmendem Verschleiß am Zugmittel.

Deshalb wurde in der DE 38 25 091 bereits versucht, diesen Axialversatz durch eine gleichzeitige Axialbewegung des Trägers, auf dem sich die Verstellscheiben befinden, zu eliminieren. Dies bewirkt jedoch zusätzlichen Bauaufwand und bedingt weiterhin, daß die Verstellscheiben in einem beweglichen Teil gelagert sind, also in diesem Fall im Variator, obwohl aus anderen Gründen, beispielsweise im Sinne einer Baugrößenminimierung, es möglicherweise sinnvoll wäre, die Scheiben des Variators als in ihrem Durchmesser nicht veränderbare Festscheiben auszubilden.

### III. Darstellung der Erfindung

### a) Technische Aufgabe

Es ist daher die Aufgabe gemäß der vorliegenden Erfindung, ein Zugmittelgetriebe zu schaffen, welches einfach und kostengünstig in der Herstellung und im Aufbau ist, und einen möglichst geringen Bauraum bei möglichst großer Bandbreite des Übersetzungsverhältnisses zu bieten.

### b) Lösung der Aufgabe

Diese Aufgabe wird durch die kennzeichnenden Merkmale der Ansprüche 1 bzw. 2 gelöst. Vorteilhafte Ausführungsformen ergeben sich aus den Unteransprüchen.

Dadurch, daß innerhalb des Zugmittelgetriebes die eine oder mehreren Verstellscheiben bezüglich der Zugmittelebene des auf ihr laufenden Zugmittels symmetrisch vorgespannt sind, ergibt sich bei Veränderung des wirksamen Durchmessers dieser Verstellscheibe kein Axialversatz des Zugmittels, und somit weder ein unerwünschter Mehrverschleiß am Zugmittel, noch die Notwendigkeit, über die Riemenscheiben den Axialversatz des Zugmittels auszugleichen. Bei axialer Vorspannung von axialen Halbscheiben, aus denen eine Verstellscheibe zusammengesetzt ist, sind erfindungsgemäß beide Halbscheiben in gleicher Art und Weise vorgespannt, also mit gleichem Betrag und gegeneinander gerichteten Vorspannrichtungen.

Bei einer solchen aus Halbscheiben zusammengesetzten Verstellscheibe ist die Vorspannrichtung immer in Richtung des größten wirksamen Durchmessers gerichtet, da ansonsten keine Traktion zwischen Zugmittel und Verstellscheibe vorhanden ist. Bei einer durch Radialverstellung zu verändernden Verstellscheibe gilt das Gleiche.

Die Vorspannung erfolgt beispielsweise mittels Federkraft, kann aber auch durch den Druck eines Fluids, also eines Hydrauliköls oder eines Gases oder durch Magnetkraft, erzielt werden.

Sofern das Zugmittelgetriebe zwei Zugmittel umfaßt, wobei zwei der dann mindestens vier Scheiben auf einer gemeinsamen Achse, insbesondere als Doppelscheibe, laufen, besteht eine bevorzugte Ausführungsform der Erfindung darin, von den dann insgesamt mindestens vier Zugmittelscheiben die beiden äußeren Scheiben, die unterschiedlichen Zugmitteln zugeordnet sind, also Verstellscheiben auszuführen, und die beiden auf einer Achse laufenden, dazwischen liegenden Scheiben, die auf einer gemeinsamen Achse laufen und in ihrer Lage gemeinsam zwischen den beiden äußeren Scheiben hin- und herbewegt werden können, als Festscheiben auszubilden, und dabei vorzugsweise als Doppelscheibe.

Dies hat den Vorteil, daß dieser, die beiden mittleren Scheiben umfassende sogenannte Variator, abgesehen von seiner Verschwenkbarkeit keine weiteren Funktionen wie etwa die Verstellbarkeit der Scheiben umfassen muß und damit nicht unnötig kompliziert und groß wird. Statt dessen steht ohnehin bei den äußeren Scheiben mehr Bauraum zur Verfügung, da deren Rotationsachse gegenüber dem umgebenden Gehäuse nicht verlagerbar sein müssen, so daß an diesen äußeren Scheiben auch die Realisierung als Verstellscheibe leichter untergebracht werden kann.

### c) Ausführungsbeispiele

Eine Ausführungsform gemäß der Erfindung ist im folgenden anhand der Figuren beispielhaft näher beschrieben. Es zeigen:
- Fig. 1:: eine Detaildarstellung einer Verstellscheibe,
- Fig. 2:: eine Bauform des Getriebes, und
- Fig. 3:: eine andere Variante des Getriebes.

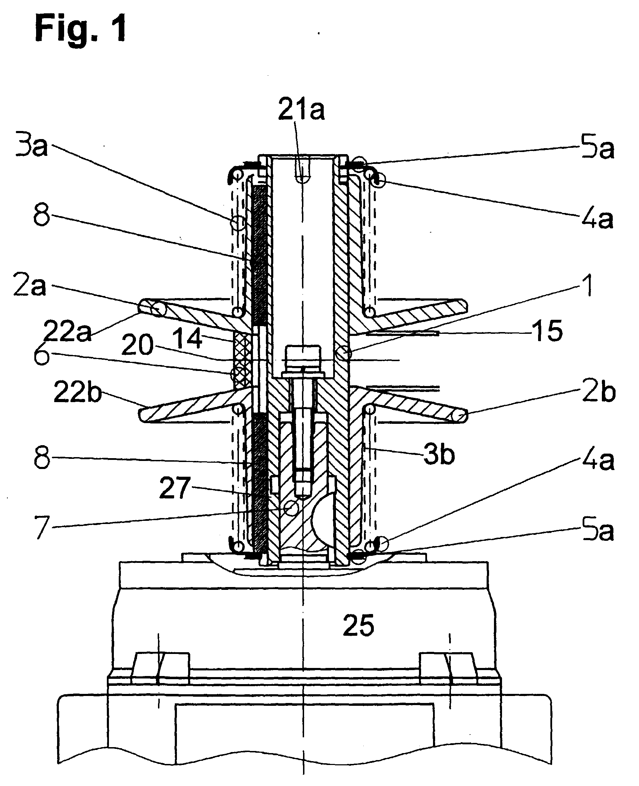

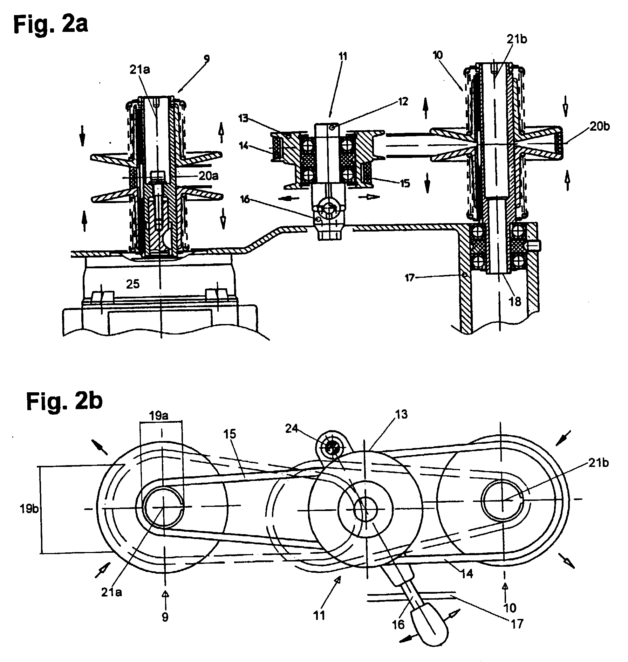

Fig. 2 zeigt eine Bauform des erfindungsgemäßen Getriebes in einem teilweisen Vertikalschnitt (Fig. 2a) sowie in der Aufsicht (Fig. 2b). In Fig. 1 ist zusätzlich in vergrößerter Detaildarstellung die Antriebs-Verstellscheibe 9 aus Fig. 2 im Detail dargestellt.

Bei dem Getriebe sind die beiden äußeren Zugmittel-Scheiben, die Antriebs-Verstellscheibe 9 und die Abtriebs-Verstellscheibe 10 als Verstellscheiben insofern ausgebildet, als zwar deren Rotationsachse gegenüber dem Gehäuse 17 des Getriebes unverändert bleibt, ihr wirksamer Durchmesser 19 jedoch veränderbar ist, was am besten anhand der Darstellung der Fig. 1 zu erkennen ist:

Fig. 1 zeigt die Antriebs-Verstellscheibe 9 in einem Längsschnitt, die mit ihrer Welle drehfest auf der Motorwelle 7 des antreibenden Motors 25 befestigt ist. Ansonsten jedoch ist die Abtriebs-Verstellscheibe 10 analog aufgebaut, bis auf den Umstand, daß deren Welle die Abtriebswelle 18 darstellt, die mit der anzutreibenden Einheit, beispielsweise dem Bohrfutter einer Bohrmaschine etc. drehfest verbunden werden kann.

Die Verstellung des wirksamen Durchmessers erfolgt dadurch, daß - siehe am besten Fig. 1 - die Verstellscheibe aus zwei Halbscheiben 2a, 2b besteht, welche auf gegenüberliegenden Seiten an dem Zugmittel, in diesem Falle dem Antriebs-Keilriemen 14, insbesondere einem Flachkeilriemen, angreifen. Dessen Flanken sind zueinander konisch angeordnet, und ebenso sind die gegeneinander gerichteten Zugmittel-Laufflächen 22a, 22b der beiden Halbscheiben 2a, 2b in einem Winkel zur Zugmittelebene 20, in der der Keilriemen 14 umläuft, angestellt.

Durch Relativbewegung der beiden Halbscheiben 2a, 2b zueinander entlang der Rotationsachse dieser Verstellscheibe wird der axiale Abstand der beiden Zugmittel-Laufflächen 22a, 22b zueinander verändert, und wegen der feststehenden Breite des Keilriemens 14 in axialer Richtung, also in Richtung der Rotationsachse 21a der Verstellscheibe, wandert der an diesen Laufflächen 22a, 22b anliegende Keilriemen 40 radial nach innen bzw. außen.

Der Abstand zwischen den Laufflächen 22a und 22b wird passiv eingestellt, indem beide Halbscheiben 2a und 2b jeweils von ihrer Rückseite her in Richtung der Rotationsachse 21a mittels einer Feder 3a zur Zugmittelebene 20 hin vorgespannt ist. Die Federn 3a, 3b stützen sich über einen Federteller 4a, 4b sowie einen Sicherungsring 5a, 5b auf dem von der Halbscheibe 2a, 2b jeweils abgewandten Ende gegenüber der Welle 7 der Verstellscheibe ab.

Da die koaxial zu dieser Welle angeordneten Federn 3a, 3b gleich dimensioniert sind, und zusätzlich bei Drehung des Getriebes auch Vibrationen auftreten, wird sich die Zugmittelebene 20, also die Mitte des umlaufenden Keilriemens 14, unabhängig vom Abstand der beiden Laufflächen 22a, 22b zueinander immer auf die Mitte zwischen den beiden Sicherungsringen 5a und 5b und damit immer in der gleichen Position einstellen und halten.

Es wird also kein Versatz in Richtung der Rotationsachse 21a am Keilriemen 14 erfolgen.

Die drehfeste, jedoch axial verschiebliche Verbindung der Halbscheiben 2a, 2b gegenüber der sie tragenden Welle 27 geschieht konventionell mittels in Axialrichtung verlaufender Paßfedern 8a, 8b und entsprechender, jedoch länger ausgebildeter Nuten im Innenumfang der Halbscheiben 2a einerseits und im Außenumfang der Welle 27 andererseits, in welche die die drehfeste Verbindung bietende Paßfeder 8a, 8b jeweils etwa zur Hälfte eintauchen.

Der Abstand der Laufflächen 22a, 22b zueinander stellt sich passiv ein entsprechend dem abseits der Verstellscheibe auf den Keilriemen 14 einwirkenden, in der Zugmittelebene 20 wirkenden Kräfte.

Wie Fig. 2 zeigt, besteht das Zugmittelgetriebe aus zwei Keilriemen, dem Antriebskeilriemen 14 und dem Abtriebskeilriemen 15, wovon ersterer über die Antriebsverstellscheibe 9 und die Variator-Doppelscheibe 13 umläuft, während letzterer in einer parallel hierzu, etwas tiefer liegenden Ebene gemäß Fig. 2a um die Variator-Doppelscheibe 13, und eine Abtriebs-Verstellscheibe 10 umläuft.

Die beiden Keilriemen 14, 15 laufen dabei - entsprechend der gewünschten Gesamtübersetzung oder -untersetzung - auf der Variator-Doppelscheibe 13 auf unterschiedlich großen, jedoch fixen und nicht verstellbaren, wirksamen Durchmessern.

Die Variator-Doppelscheibe 13 ist auf einer Variatorachse 12, die parallel zu den Rotationsachsen 21a und 21b der äußeren Verstellscheiben 9, 10 steht, kugelgelagert. Die Variatorachse 12 wiederum ist etwa lotrecht auf dem Variatorhebel 16 befestigt, welcher um eine Schwenkachse 24, die parallel zur Variatorachse angeordnet ist, und nicht auf der Verbindungslinie zwischen den Rotationsachsen 21a und 21b der äußeren Verstellscheiben liegt, verschwenkbar.

Durch Verschwenken des Variatorhebels 16 wird der Abstand der Variator-Doppelscheibe 13 gegenüber der Rotationsachse 21a der linken Verstellscheibe 9 z. B. verringert, und gleichzeitig gegenüber der Rotationsachse 21b der rechten Verstellscheibe 10 vergrößert.

Dadurch wird ein verstärkter Zug am rechten Keilriemen 14 ausgeübt, wodurch die Halbscheiben 2a, 2b der rechten Verstellscheibe 10 symmetrisch nach oben und unten auseinandergedrückt und damit deren wirksamer Durchmesser verkleinert wird.

Umgekehrt läßt der Zug am linken Keilriemen 15 nach, wodurch die Federn 3a, 3b der linken Verstellscheibe 9 die Halbschalen 2a, 2b axial gegeneinander drücken und bei der linken Verstellscheibe 9 der wirksame Durchmesser vergrößert wird. Dadurch wird bei beiden Keilriemen 14, 15 das Über- bzw. Untersetzungsverhältnis im gleichen Sinne geändert, bei der vorbeschriebenen Bewegung also bei gleichbleibender Drehzahl des Motors 25 die Drehzahl der Abtriebswelle erhöht. Auch der umgekehrte Vorgang funktioniert in analoger Weise.

Dadurch, daß unabhängig von der Verstellung der Verstellscheiben die Keilriemen 14, 15 immer in der gleichen Zugmittelebene 20a, 20b bleiben, kann auch die Verstellung des Variators, also das Verschwenken des Variatorhebels 16 mit der Variatordoppelscheibe 13, parallel bzw. in dieser Ebene 20 erfolgen, ohne daß eine Ausgleichsbewegung quer zu dieser Ebene notwendig ist.

Dies ermöglicht einen sehr einfachen und raumsparenden Aufbau des stufenlos arbeitenden Zugmittelgetriebes gemäß der Figuren 2.

Ein weiterer wichtiger Vorteil des Getriebes gemäß Fig. 2 besteht darin, daß die Doppelscheibe 13 mit ihren beiden wirksamen Durchmessern das Gesamtübersetzungsverhältnis des Getriebes mitbestimmt.

Dadurch, daß z. B. die Doppelscheibe 13 von der Variatorachse 12 abgezogen und umgekehrt, also mit dem kleinen wirksamen Durchmesser an der Oberseite, wieder aufgesteckt wird, unter gleichzeitigem Austausch der beiden Keilriemen, läßt sich das Übersetzungsverhältnis bereits drastisch verändern.

Ebenso kann natürlich anstelle der Doppelscheibe 13 eine andere Doppelscheibe aufgesetzt werden, mit anderen wirksamen Durchmessern, worauf sich dann ein anderer Übersetzungsbereich des Getriebes ergibt. Die sich unterschiedlich ergebenden Umlauflängen der Riemen können beispielsweise durch Verlagerung der Variatorachse 12 entlang des Variatorhebels 16 ausgeglichen werden.

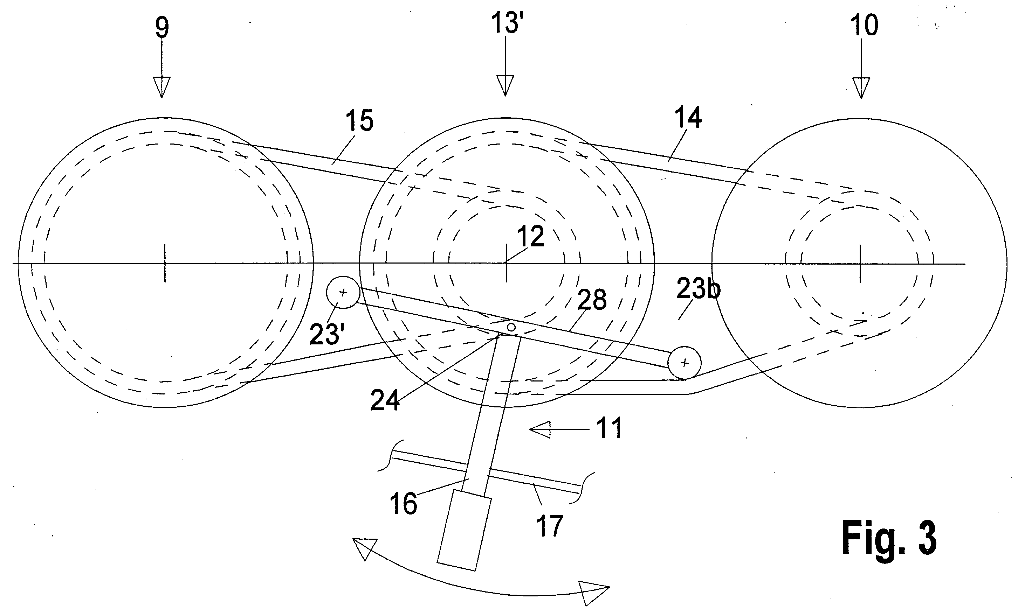

Fig. 3 zeigt eine andere Bauform des Getriebes, die sich von der Lösung gemäß Fig. 2 dadurch unterscheidet, daß die mittlere Doppelscheibe 13' nicht mehr auf dem Variator, sondern ortsfest mit ihrer Achse 12' bezüglich des nicht dargestellten Gehäuses gelagert ist. Der Variator 11 besteht vielmehr aus zwei Spannrollen 23a, 23b, die über einen Spannhebel 28 miteinander verbunden und auf dessen Enden sie drehbar befestigt sind. Die eine Bandrolle 23a befindet sich in der Zugmittelebene 20a und innerhalb des Keilriemens 15. Für die Spannrolle 23b trifft dies analog auf den Keilriemen 14 zu.

Der Spannhebel 28 ist um eine Achse in seinem Mittelbereich, die senkrecht zu der Zugmittelebene steht, mittels eines Variatorhebels 16 verschwenkbar, mit der Folge, daß entweder die Spannrolle 23b den Keilriemen 14 oder die Spannrolle 23a den Keilriemen 15 nach außen drückt und damit dessen Weg zu vergrößern versucht, mit der Folge, daß der betreffende Keilriemen die beiden Halbscheiben 2a, 2b der entsprechenden Verstellscheibe auseinanderdrückt und deren wirksamen Durchmesser verringert.

### BEZUGSZEICHENLISTE

- 1: Welle
- 2a, 2b: Halbscheibe
- 3a, 3b: Feder
- 4: Federteller
- 5: Sicherungsring
- 6: Keilriemen
- 7: Motorwelle
- 8a, 8b: Paßfeder
- 9: Antriebs-Verstellscheibe
- 10: Abtriebs-Verstellscheibe
- 11: Variator
- 12: Variatorachse
- 13: Variator-Doppelscheibe
- 14: Antriebs-Keilriemen
- 15: Abtriebs-Keilriemen
- 16: Variator-Hebel
- 17: Gehäuse
- 18: Abtriebswelle
- 19: wirksamer Durchmesser
- 20a, 20b: Zugmittel-Ebene
- 21a, 21b: Rotationsachse
- 22a, 22b: Zugmittel-Lauffläche
- 23: Spannrolle
- 24: Schwenkachse
- 25: Motor
- 27: Welle
- 28: Spannhebel
- 29: Sichel
- 30: Achse
- 31: Grundkörper
- 32: Steuerdorn

## Patentansprüche

1. Zugmittelgetriebe mit
- einem endlosen Zugmittel,
- zwei Zugmittel-Scheiben, wovon
- wenigstens eine Scheibe eine zwischen zwei Endstellungen (19a, 19b) in ihrem wirksamen Durchmesser (19) verstellbare Verstellscheibe ist, während die übrigen Scheiben in ihrem wirksamen Durchmesser unveränderbare Festscheiben sind,
- wobei die wenigstens eine Verstellscheibe in Richtung auf eine ihrer Endstellungen vorgespannt ist, und
- einem Variator (11) zum Verlagern des Laufweges wenigstens eines Zugmittels in der jeweiligen Zugmittelebene (20a) bzw. (20b) bezüglich der wenigstens einen Verstellscheibe,
**dadurch gekennzeichnet, daß**
die wenigstens eine Verstellscheibe bezüglich der Zugmittelebene (20a) bzw. (20b) des auf ihr laufenden Zugmittels symmetrisch vorgespannt ist.

2. Zugmittelgetriebe mit
- zwei endlosen Zugmitteln,
- vier Zugmittel-Scheiben, wovon
- zwei Scheiben drehfest miteinander wirkverbunden sind, und
- wenigstens eine Scheibe eine zwischen zwei Endstellungen (19a, 19b) in ihrem wirksamen Durchmesser (19) verstellbare Verstellscheibe ist, während die übrigen Scheiben in ihrem wirksamen Durchmesser unveränderbare Festscheiben sind,
- wobei die wenigstens eine Verstellscheibe in Richtung auf eine ihrer Endstellungen vorgespannt ist, und
- einem Variator (11) zum Verlagern des Laufweges wenigstens eines Zugmittels in der jeweiligen Zugmittelebene (20a) bzw. (20b) bezüglich der wenigstens einen Verstellscheibe,
**dadurch gekennzeichnet, daß**
die wenigstens eine Verstellscheibe bezüglich der Zugmittelebene (20a) bzw. (20b) des auf ihr laufenden Zugmittels symmetrisch vorgespannt ist.

3. Zugmittelgetriebe nach einem der vorhergehenden Ansprüche,
**dadurch gekennzeichnet, daß**
jede Verstellscheibe aus zwei Halbscheiben besteht, deren Zugmittel-Laufflächen (22a, 22b) zur Zugmittel-Ebene (20) geneigt verlaufen und wobei die Halbscheiben (2a, 2b) in Richtung auf die mittige Zugmittelebene (20) mit jeweils gleicher Kraft axial vorgespannt sind, insbesondere mittels einer axial außerhalb der Halbscheibe und koaxial zu deren Rotationsachse (13) angeordnete Druckfeder (3a, 3b).

4. Zugmittelgetriebe nach einem der vorhergehenden Ansprüche,
**dadurch gekennzeichnet, daß**
zwei der vier Zugmittelscheiben Verstellscheiben sind, und zwei Scheiben Festscheiben sind.

5. Zugmittelgetriebe nach einem der vorhergehenden Ansprüche,
**dadurch gekennzeichnet, daß**
die beiden drehfest miteinander wirkverbundenen Scheiben Festscheiben sind.

6. Zugmittelgetriebe nach einem der vorhergehenden Ansprüche,
**dadurch gekennzeichnet, daß**
die beiden drehfest miteinander wirkverbundenen Scheiben zwischen den beiden anderen Scheiben angeordnet sind.

7. Zugmittelgetriebe nach einem der vorhergehenden Ansprüche,
**dadurch gekennzeichnet, daß**
der Variator (11) die beiden drehfest miteinander wirkverbundenen Scheiben umfaßt und relativ zu den Rotationsachsen (21a, 21b) der beiden anderen Scheiben verlagerbar ist.

8. Zugmittelgetriebe nach Anspruch 1 bis 6,
**dadurch gekennzeichnet, daß**
der Variator (11) wenigstens eine Spannrolle (23) im Laufweg wenigstens eines der Zugmittel umfaßt.

9. Zugmittelgetriebe nach Anspruch 8,
**dadurch gekennzeichnet, daß**
der Variator (11) jeweils eine Spannrolle (23a, 23b) in jedem der Laufwege der Zugmittel umfaßt, und durch Bewegen des Variators (11) die Spannrollen (23a, 23b) die Laufwege der Zugmittel reziprok verändern.

10. Zugmittelgetriebe nach einem der vorhergehenden Ansprüche,
**dadurch gekennzeichnet, daß**
die beiden Zugmittelebenen (20a, 20b) parallel zueinander liegen.

11. Zugmittelgetriebe nach einem der vorhergehenden Ansprüche,
**dadurch gekennzeichnet, daß**
der Variator (11) in der Zugmittelebene um eine Schwenkachse (24), die lotrecht zur Zugmittelebene (20) steht, verschwenkbar ist.

12. Zugmittelgetriebe nach einem der vorhergehenden Ansprüche,
**dadurch gekennzeichnet, daß**
die Schwenkachse (24) des Variators (12) nicht mit der Rotationsachse derjenigen der beiden drehfest miteinander wirkverbundenen Scheiben identisch ist, auf welcher das Zugmittel läuft, welches über eine Verstellscheibe geführt ist.

13. Zugmittelgetriebe nach einem der vorhergehenden Ansprüche,
**dadurch gekennzeichnet, daß**
die Vorspannungen der beiden Verstellscheiben hinsichtlich Betrag und Vorspannrichtung gleich sind.

14. Riemengetriebe mit zwei endlos umlaufenden Riemen, mit
- vier Riemenscheiben (9, 10, 13), wovon zwei mittlere Riemenscheiben drehfest miteinander gekoppelt als Doppelriemenscheibe (13) zwischen den beiden äußeren Riemenscheiben (9, 10) laufen,
- die äußeren Riemenscheiben (9, 10) als Verstellscheiben ausgebildet sind, indem sie jeweils aus zwei Halbscheiben (2a, 2b) mit schräg von der mittigen Zugmittelebene (20) nach außen weisenden Zugmittel-Laufflächen (22a, 22b) aufweisen und mittels koaxial auf den Außenseiten der Halbscheiben angeordneter Druckfedern (3a, 3b) symmetrisch axial nach innen vorgespannt sind, und
- die Doppelriemenscheibe (13) auf dem Variator (11) gelagert ist, welcher in der Zugmittelebene (20) verschwenkbar ist um eine Schwenkachse (24), die beabstandet zur Verbindungslinie der äußeren Verstellscheiben (9, 10) angeordnet ist.
